(19) Europäisches Patentamt
European Patent Office
Office européen des brevets

(11) **EP 4 621 615 A1**

(12) **EUROPEAN PATENT APPLICATION**

(43) Date of publication:
**24.09.2025 Bulletin 2025/39**

(21) Application number: **24164089.5**

(22) Date of filing: **18.03.2024**

(51) International Patent Classification (IPC):
**G06F 21/55** (2013.01)   **G06F 21/57** (2013.01)
**G06F 21/62** (2013.01)   **G06N 20/00** (2019.01)

(52) Cooperative Patent Classification (CPC):
**G06F 21/577; G06F 21/554; G06F 21/6245;
G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bitfast GmbH
96450 Coburg (DE)**

(72) Inventor: **Bautista, Erik Dziekonski
96450 Coburg (DE)**

(74) Representative: **Gillespie, Richard
Inventorship
Suite 10050
5 Fitzwilliam Square
Dublin 2, D02 R744 (IE)**

(54) **LLM SECURITY**

(57) The present disclosure is directed to systems and methods for enhancing the security of Large Language Models (LLMs). The method includes receiving a prompt at a first LLM, wherein: the first LLM is deployed on a first server; and the first LLM comprises a probabilistic classifier; using the first LLM to generate a score for the prompt, wherein the score is indicative of the risk that the prompt is malicious; and determining, based on the score, whether to forward the prompt to a second LLM or to reject the prompt.

Figure 2

**EP 4 621 615 A1**

**Description**

Field

The present disclosure is directed towards methods for improving the security of Large Language Models (LLMs) which are implemented on computing systems. In particular, protecting LLMs against malicious attacks, such as injection attacks or unauthorized access.

Background

The advent of Large Language Models (LLMs) in the field of artificial intelligence has marked a significant milestone in the development of intelligent computational systems. However, the rise in the capabilities and applications of these models has brought with it a host of new security challenges. As LLMs become increasingly integrated into various aspects of technology and daily life, ensuring their security, and the security of systems which implement them, against potential threats and vulnerabilities is of paramount importance.

A typical prior art implementation LLM systems requires the LLM to interact with data or endpoints. Typically, a vector database is used to connect the LLM to data or endpoints. Typically, the input data string is tokenised. The resultant tokens are assigned token IDs. The token IDs can then be used to create embeddings. Embeddings are advanced vector representations of tokens. In particular, embeddings are configured to capture as accurately as possible the relationship between tokens - e.g. the nuance, connections, or semantic relationships between tokens. Each embedding is generally a series of real numbers on a vector space computed by a neural network. The embeddings can then be aggregated to form a sentence-level vector representation The final sentence-level vector representation of the string is then stored in a vector database. The vector database is optimized for operations involving high-dimensional vectors, such as e.g. nearest neighbour searches.

A vector database for LLMs is designed to enhance the capability of the LLM by storing and updating a long-term 'personalized' memory. By personalised, it is meant that the content of the memory is tailored to the user of the LLM. This is done by monitoring user preferences and characteristics across various AI assistant domains. The vector database uses topic-based vector representations to effectively manage the information that LLMs can generate or need to recall. This facilitates more accurate and personalized interactions with users over time.

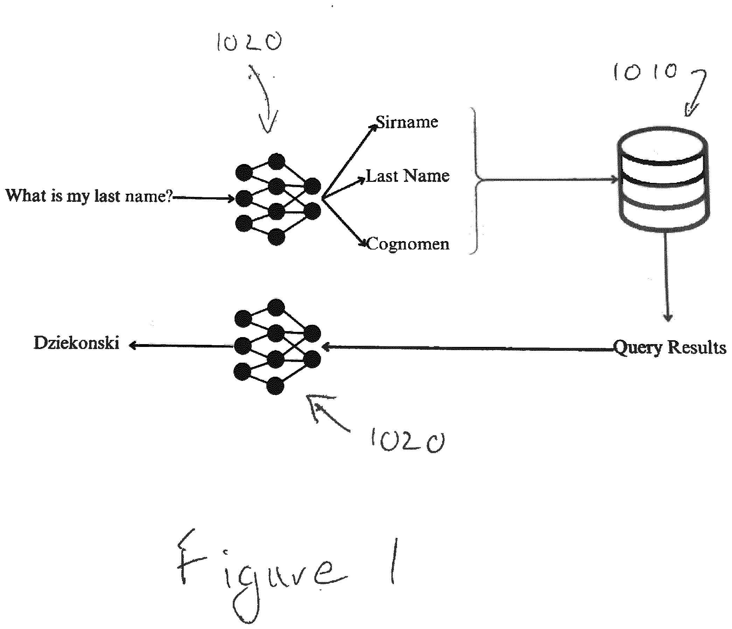

As shown in figure 1, a vector database 1010 is accessed through queries from an LLM 1020. If the LLM 1020 becomes compromised through prompt injection attacks, the data output by the LLM 1020 can include confidential or sensitive data from the vector database that was never meant to be independently accessed and that meant remain secure.

One attempt to address this issue is the implementation of LLM compartmentalization. As discussed in the paper entitled 'The Dual LLM pattern for building AI assistants that can resist prompt injection' by S. Willison, pairs of LLMs can be coupled together to improve the security of the LLM system - a Privileged LLM and a Quarantined LLM. The Privileged LLM is the core of an AI assistant used to control a device. For example, the AI can be used to generate and send emails. It accepts input from trusted sources-primarily the user themselves-and acts on that input in various ways. The Quarantined LLM is used to work with untrusted content-content that might conceivably incorporate a prompt injection attack. It does not have access to tools and is expected to have the potential to go rogue at any moment. As the author concedes, this system does not work reliably. As noted in the paper, building AI assistants comprising a Privileged LLM and a Quarantined LLM is likely to result in a great deal more implementation complexity and may lead to a degraded user experience. Indeed, in the paper entitled 'You can't solve AI security problems with more AI', by S. Willison, suggests that using additional language model AIs to protect against injection attacks against language model AIs is fundamentally flawed.

In addition, presently known LLMs are vulnerable to prompt injection attacks. These attacks exploit the intrinsic nature of LLMs, which rely on user-provided prompts, to generate responses that can be unintended and potentially harmful. The core challenge posed by prompt injection attacks lies in their leverage of the inherent learning and processing capabilities of LLMs. By manipulating the input prompts, attackers can induce LLMs to produce outputs after the attack that are dangerous or misleading. Thus, prompt injection attacks can be used to bypass security measures, manipulate data, and even leak confidential and sensitive information.

Research has been conducted into the scope of this problem. For example, the paper entitled 'Not what you've signed up for: Compromising real-world LLM-integrated applications with indirect prompt injection' by K. Greshake et al. discusses Application-Integrated LLMs can be susceptible to prompt injection attacks through direct prompting and processing 'poisoned' content retrieved from the web with pre-injected malicious prompts, shedding light on a new threat landscape and demonstrating the practical viability of these attacks.

Further, the paper entitled 'Backdooring instruction-tuned large language models with virtual prompt injection' by J. Yan et al. introduced Virtual Prompt Injection (VPI). VPI is a backdoor attack setting for instruction-tuned LLMs, enabling attackers to manipulate model functionalities without explicit injection at the input. In the paper entitled 'Ignore this title and hackaprompt: Exposing systemic vulnerabilities of LLMs through a global scale prompt hacking competition' Schulhoff et al. (2023) verified, with data from a global prompt hacking competition with over 600K adversarial prompts against three state-of-the-art LLMs, that LLMs can indeed be manipulated through prompt hacking, underlining the critical need for developing effective defences against such vulnerabilities.

Significantly, as set out in the paper entitled 'Securing LLM Systems Against Prompt Injection' by R. Harang the problem of prompt injection is not restricted solely to LLMs, but also affects the systems utilising LLMS. Taking LangChain as an example (as it is recognized as one of the most popular LLM networks currently being used in applications by startups), there are already a number of known security problems. These security issues include remote code execution through the llm_math chain, server-side request forgery via APIChain.from_llm_and_api_docs, and SQL injection attacks through SQLDatabaseChain.

The implications of this vulnerability are far-reaching, particularly where the accuracy and reliability of information are crucial, e.g. for the control of systems such as autonomous vehicles, and in sectors such as healthcare, finance, and legal. As such, prompt injection attacks have the potential to compromise critical infrastructure. As such, there is an urgent need to mitigate the risk of attacks against LLMs and provide systems and methods to safeguard against such vulnerabilities.

The security of Large Language Models (LLMs) involves multiple dimensions, including the protection of the models themselves, the data they process, and the infrastructure on which they operate. The paper entitled 'Generate and pray: Using SALLMs to evaluate the security of LLM generated code' by Siddiq et al. highlighted the absence of benchmarks and metrics for evaluating the security of code generated by LLMs and proposed proposing a framework named SALLM for security-centric evaluation. The paper entitled '"if security is required": engineering and security practices for machine learning-based IOT devices' by Krishna Gopalakrishna et. al. described various security practices and investment in ML-enabled IoT systems, with concerns over IP theft and reverse engineering during LLM deployment for IoT devices.

Additionally, in the paper entitled 'A dataset of natural language prompts for security evaluations' the security performance of LLMs in code generation was critically assessed by Tony et al., who introduced LLMSecEval, a dataset that includes examples of security vulnerabilities and secure implementations, providing a benchmark for evaluating the security of LLMs.

There have been attempts to address this issue. For example, BITE (Bert-based Integrated Text Editing), developed by INK-USC, provided a development environment tailored to enhance the editing capabilities of Bert-based models, focused on improving their accuracy and reliability in generating and refining text outputs. Garak, developed by L Dercrynski provides a semantic textual analysis tool. In particular, LLMs are used to understand and interpret text at a deeper level, offering insights into the semantic structures that underpin language models. This tool is particularly suitable for identifying potential biases or inaccuracies in model outputs, contributing to more secure and unbiased LLM applications. HouYi, from LLMSecurity, is a comprehensive framework designed for the security analysis of LLMs. It addresses various security concerns, including vulnerability assessment and mitigation strategies, providing a platform for securing LLMs against potential threats and exploits. PromptMap, developed by Utku Sen, focuses on mapping the relationships between prompts and responses in LLMs. This tool aids in understanding how different inputs can lead to varied outputs, facilitating the identification of potential security risks in the way LLMs interpret and respond to prompts. Rebuff, by ProtectAI, is designed to defend against adversarial attacks on LLMs. It employs advanced techniques to detect and neutralize attempts to manipulate or deceive LLMs, ensuring their outputs remain trustworthy and uncorrupted.

However, vulnerabilities remain. As discussed in the paper 'Don't you (forget NLP): Prompt injection with control characters in ChatGPT' by Breitenbach et. al., it is still possible to manipulate the inputs to large language models (LLMs) through control characters, such as, for example, carriage returns (\r), backspaces (\b), etc. Mitigating the integrity of model responses against the manipulation of prompts with control characters is a significant challenge. In particular, the malicious use of control characters can influence or override the intended behaviour of an LLM causing ignored instructions, forgotten context, hallucinated responses, or the like.

Object

While the above tools can be used to improve security, there is a continuing need to improve the security of LLMs so that they are not used a s a conduit for attacks on the operation of the LLMs, the data upon which the LLMs operate, and the systems that utilise LLMs.

Summary of the Invention

The present disclosure is directed towards a method for enhancing the security of Large Language Models (LLMs), comprising: receiving a prompt at a first LLM, wherein: the first LLM is deployed on a first server; and the first LLM comprises a probabilistic classifier; using the first LLM to generate a score for the prompt, wherein the score is indicative of the risk that the prompt is malicious; and determining, based on the score, whether to forward the prompt to a second LLM or to reject the prompt.

Preferably, if the score for a prompt is indicative of a probability above a first predetermined risk threshold, the prompt is rejected.

Preferably, if the score for a prompt is indicative of a probability below a second predetermined risk threshold, the prompt is forwarded to the second LLM for processing.

Preferably, the first server receives the prompt from a controller, and if it is determined to forward the prompt, the first server provides the prompt to the controller, whereby: the first server and the first LLM are quarantined, such that the first LLM is accessed by the controller and does not have access to sensitive data or tools.

Preferably, wherein the first server is a bullet-proof server. Preferably, the controller deployed on a bullet-proof server.

Preferably, the controller is configured to provide the prompt received from the first LLM to a second LLM deployed on a second server for processing. More preferably, the second server is a bullet-proof server.

Preferably, the method further comprises using the first server to sign a prompt before it is forwarded to the second LLM. Preferably, the method further comprises using the controller to sign a prompt before it is forwarded to the second LLM. Preferably, the method further comprises using the second server to verify a signature on a prompt.

Preferably, the method further comprises fine-tuning the first LLM using training inputs, wherein a training input comprises a sample prompt and a score for the sample prompt, wherein the score is indicative of the sample prompt being malicious or safe.

Preferably, the method further comprises obtaining training inputs from a predetermined list of internet sites.

Preferably, if a prompt has a score indicative of a risk above a first predetermined threshold and below a second predetermined threshold, the method further comprises providing the prompt to a user for classification, wherein user classification comprises a user assigning a score to the prompt. Preferably, the method further comprises including the prompt and the user assigned score for the prompt to the training inputs.

The present disclosure is also directed towards a system comprising a first LLM deployed on a first server, a second LLM deployed on a second server, and a controller deployed on a third server, wherein the system comprises means for performing a method according to any preceding claim.

The present disclosure is further directed towards a computer program comprising instructions which, when the program is executed by a computer coupled to a first LLM deployed on a first server, and a second LLM deployed on a second server, cause the computer to carry out a method as described above.

The present disclosure is also directed towards a computer-readable storage medium or a data carrier signal carrying the computer program described above.

Brief Description of the Drawings

The invention will be more clearly understood from the following description of an embodiment thereof, given by way of example only, with reference to the accompanying drawings, in which:-

Figure 1 shows a prior art example of an LLM system;
Figure 2 shows a LLM system in accordance with the present disclosure;
Figure 3 shows a training system that may be used with a LLM system according to the present disclosure;
Figure 4 shows a method of prompt verification;
Figure 5 shows the steps needed to obtain a hidden secret key, where the key has been hidden in accordance with the present disclosure; and
Figure 6 shows a method in accordance with the present disclosure.

Detailed Description

In order to understand an input sequence to an LLM, the input sequence X can be represented as $X = \{x_1, x_2, ..., x_n\}$, where each $x_i$ represents a token in the input sequence. The LLM maps this input sequence to an output sequence Y, which can be represented as $Y = \{y_1, y_2, ..., y_m\}$, where each $y_i$ symbolizes a token in the output sequence. As such, the LLM can be described as performing a function $f$, such that $f(X)=Y$.

When control characters are integrated into the input sequence X, such control characters are referred to in this disclosure as special tokens $c$. Representing a control character by c and its position in X by i. The inclusion of c can modify the function $f$ to a new function $f'$, altering the interpretation of subsequent tokens. The effect of a control character on the processing of X can be represented as an alteration of X to X', where X' is the sequence perceived by the model after interpreting the control characters. As such, inclusion of $c$ can be described triggering a transformation $T$ applied to X, such that $X' = T(X, c, i)$.

If X contains a carriage return (i.e. $c$=(\r)) in position i within in the input sequence (i.e. $x_i$=(\r)), this may cause X an LLM to split X into portions (e.g. a first portion $x_1$ to $x_{i-1}$, and a second portion $x_{i+1}$ to $x_n$). This in turn may result in an LLM only processing a portion of the input sequence (i.e. the second portion). Thus, given $n$ carriage returns at positions $i_1, i_2, ... , i_n$ in X, the transformation T is recursively applied to remove all portions of the prompt sequence aside from the final portion following $i_n$, resulting in a modified input sequence X'. The output Y' is then a function of X' instead of X, i.e., $Y' = f'(X')$

If X contains a backspace (i.e. $c$=(\b)) in position i within the input sequence (i.e. $x_i$=(\b)), the transformation T could involve removing the token immediately before i. Given $n$ backspaces at positions $i_1, i_2, ... , i_n$ in X, the transformation T is recursively applied to remove $n$ preceding tokens, resulting in a modified input sequence X". The output Y" is then a function of X" instead of X, i.e., $Y"= f"(X")$.

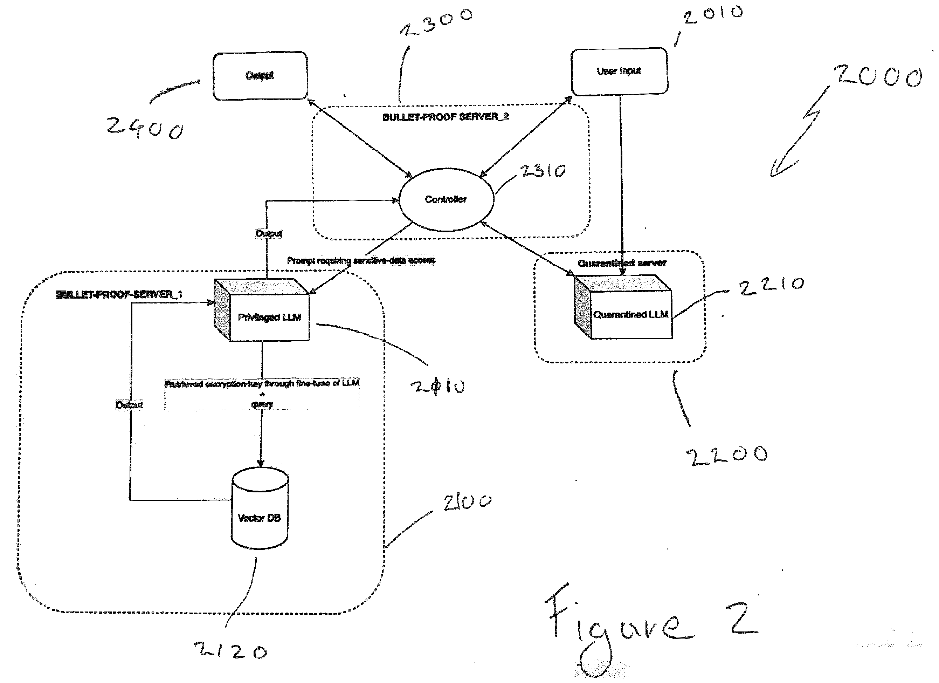

Figure 2 shows a schematic of an LLM system 2000 in accordance with the present disclosure. The primary rationale behind the present disclosure is to isolate different functional components of the LLM system into separate environments, thereby reducing the risk of systemic vulnerabilities.

In a system according to the present disclosure, a Privileged LLM (P-LLM) 2110 is designed to control a system to perform high-security tasks. The P-LLM 2110 also has access to sensitive data, such as the vector database 2120. Preferably, the P-LLM 2110 operates in a highly secure computing system. The Quarantined LLM (Q-LLM) 2210 is responsible for the initial processing of inputs. The P-LLM 2110 is preferably located on a first server, which is referred to in this disclosure as a privileged server (P-server) 2100. The Q-LLM 2210 is preferably located on a second server, which is referred to in this disclosure as a quarantined server (Q-server) 2200. A controller 2310 is preferably located on a third server, which is referred to in this disclosure as a controller server (C-server) 2300.

In use, a user provides an input prompt 2010, which is passed to the controller 2310. The controller 2310 serves as an intermediary. In particular, the controller 2310 is configured to manage interactions between different portions of the system. Further, the controller 2310 is preferably configured to ensure data is securely transferred.

The controller 2310 forwards the prompt 2010 to the Q-LLM 2210. The Q-LLM 2210 of the present disclosure is configured to detect and reject malicious prompts. Preferably, the Q-LLM 2210 is configured to run in a controlled environment without access to sensitive tools - e.g. the Q-LLM 2210 is quarantined such that it has no access to, and is unable to control, any external systems or devices. By external systems or devices, it is meant that the Q-LLM 2210 is not directly connected to anything external to the LLM system 2000 of the present disclosure. Thus, the Q-LLM 2210 does not execute prompts. Instead, when the Q-LLM processes a prompt, it returns a score indicative of the risk that the prompt is malicious.

Preferably, the Q-LLM is pretrained. Any suitable known pretrained LLM can be used for the Q-LLM 2210. For example, Mistral, Llama2 or even GPT may be used. Mistral-7B has been found to be particularly suitable.

Preferably, the Q-LLM has a transformer architecture, comprising an embedding layer, followed by a plurality of transformer layers. Preferably, one or more (and ideally each) of the transformer layers includes a self-attention mechanism. The self-attention mechanism enables the model to attend to different parts of the input sequence and capture long-range dependencies. Preferably, one or more (and ideally each) of the transformer layers and feed-forward neural networks. The feed-forward networks introduce non-linearity and help in learning complex patterns.

The Q-LLM 2210 also comprises a probabilistic classifier. Despite the computational overhead of running a probabilistic classifier on every prompt, it has surprisingly been found that by adding a probabilistic classifier, a dual LLM security system can be made to work. In particular, the Q-LLM 2210 can be used as part of a filter to remove malicious prompts before they are processed.

In particular, a classification head is added on top of the pre-trained model. The classification head comprises a plurality of multiple fully connected transformers interleaved with activation functions. The classification head is configured to take the final hidden states of the pre-trained model as an input and map them to a binary output. This binary output can be used as a score which is indicative of the risk of a prompt being malicious.

Mathematically, the classification head can be expressed as a series of transformations:

$$h_1=f_1(W_1x+b_1)$$

$$h_2=f_2(W_2h_1+b_2)$$

$$...$$

$$h_m=f_m(W_mh_{m-1}+b_m)$$

where $x$ is the final hidden state of the model, $W_i$ and $b_i$, are the weight matrices and bias vectors of the $i$-th fully connected layer, respectively, and $f_i$ is the activation function applied after each layer.

Preferably, the output from the last fully connected layer in the classification head is passed to the output layer, which consists of a single neuron. The output of this neuron goes through a sigmoid activation function to produce a probability value between 0 and 1, indicating the likelihood of the prompt being malicious.

Mathematically, the output layer and sigmoid activation can be expressed as:

$$p(y=1|x)=\sigma(W_0 h_m + b_0)$$

where $h_m$ is the output from the last fully connected layer, $W_0$ and $b_0$ are the weight vector and bias scalar of the output layer, respectively, and $\sigma$ is the sigmoid function.

Preferably, the Q-LLM 2210 is fine-tuned using any suitable fine-tuning method known in the art in order to process the input prompt. As used in this disclosure, the term 'fine-tuning' refers to training the weights of an LLM with new data. Preferably, the LLM is pre-trained. In particular, the LLM utilises an existing "base model", such as for example, Mistral which has already been trained. Preferably, the Q-LLM is fine-tuned using a training database (not shown). The training database comprises a plurality of training inputs. A training input comprises a training prompt and a score indicative of whether or not the prompt is malicious.

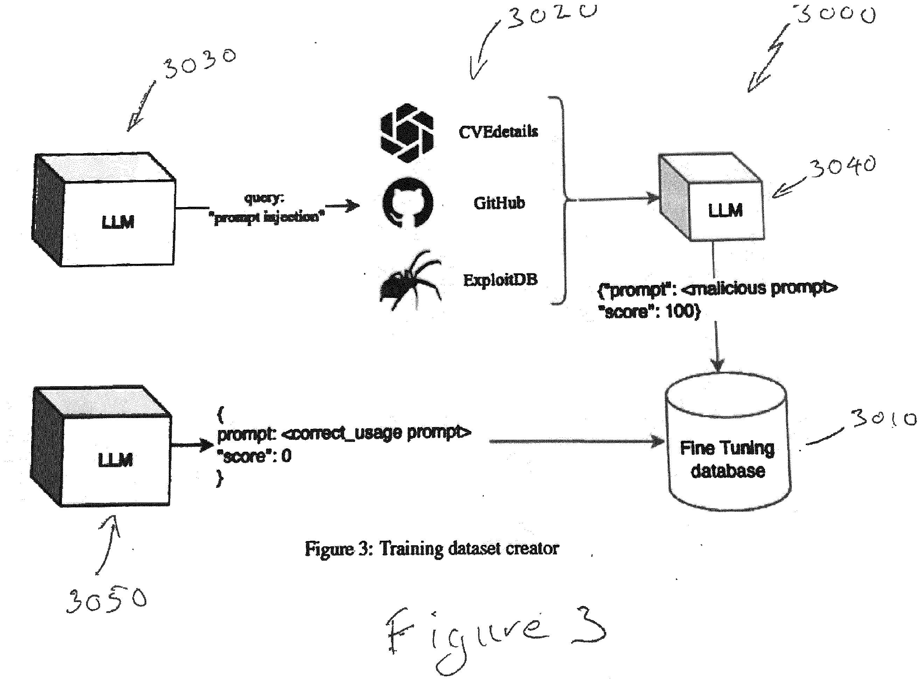

Figure 3 shows the training system 3000 for a Q-LLM 2210 according to the present disclosure. The training system 3000 is configured to create a training set of training inputs. The training set may be stored on a training prompt database 3010. The training prompt database 3010 is in turn used to fine-tune the Q-LLM 2210. However, as malicious prompts are constantly evolving, the detection capabilities of the Q-LLM 2210 are preferably updated regularly. Thus, the training system 3000 is preferably run periodically. I.e. the Q-LLM 2210 is periodically fine-tuned using training inputs from the training set.

In addition, the training prompt database is periodically updated with new training inputs which are generated based on examples of malicious prompts, such as injection attack prompts. In particular, new training inputs are added to the training set. The training inputs may be generated using known repositories of malicious prompts. For example, a list 3020 of internet sites that are known to contain malicious prompts such as e.g. GitHub, CVEdetails, ExploitDB, etc., may be kept. The internet sites in this list 3020 may be periodically scrapped to extract malicious prompts. Further, a periodic search for new sites that might contain malicious prompt information may be conducted and, if a suitable new site is found, the site may be added to the list 3020 of sites. A training input for a malicious prompt preferably comprises the malicious prompt and a score indicative of the prompt being malicious. For example, it may be stored with a score of '100'.

At the same time, depending on the use-case of the application, examples of 'good' prompts can be extracted or generated and stored in the training database. In this disclosure a 'good' prompt is one which is non-malicious. In this case a 'good' sub-prompt is stored with a score indicative of the sub-prompt being non-malicious. For example, it may be stored with a score of '0'.

The training inputs may be generated using one or more LLMs. In particular, the text in a site may be queried with a first LLM 3030. The query may be, for example, 'list the malicious prompts in this site'. A second LLM 3040 can be used to provide a score to the prompts obtained by the first LLM 3030. A third LLM 3050 can be used to obtain examples of prompts which are not malicious. In this way relevant information can be extracted and used to fine train the training prompt database 3010.

Preferably, the Q-LLM 2210 is fine-tuned at least once a month. More preferably, the Q-LLM 2210 is fine-tuned at least once a week. Similarly, the training prompt database 3010 is preferably updated at least once a month. More preferably, the training prompt database 3010 is preferably updated at least once a week. As a result, the Q-LLM 2210 will be configured to identify the latest malicious prompt attacks.

Preferably, during fine-tuning of the Q-LLM, Low-rank adaptation (LoRA) is used to adjust the weights in the Q-LLM based on the training data.

During the fine-tuning, the parameters of the classification head and output layer are trained using binary cross-entropy loss, which measures the discrepancy between the predicted probabilities and the true labels. The loss function is defined as:

$$\mathcal{L} = -\frac{1}{N}\sum_{i=1}^{N}[y_i \log p(y_i = 1|x_i) + (1 - y_i)\log(1 - p(y_i = 1|x_i))]$$

where $N$ is the number of training examples, $y_i$ is the true label of the $i$-th prompt, and $p(y_i=1/x_i)$ is the predicted probability of the $i$-th prompt being malicious.

Returning to figure 2, preferably processing the prompt 2010 comprises at least one or more of: detecting a malicious prompt, rejecting a malicious prompt, or cleaning malicious portion of an otherwise valid prompt. As a result of providing training prompts to the Q-LLM 2210, the fine-tuned Q-LLM 2210 is configured to return a score indicative of the likelihood that an input prompt 2010 is malicious. For example, the Q-LLM 2210 can provide a score of 0 to 100 depending on the probability that an input prompt 2210 is malicious. In this case, e.g. if the Q-LLM 2210 provides a score of 100 for a prompt, there is a very high probability that the prompt is malicious. Preferably, the Q-LLM 2210 comprises a classification layer. In particular, the classification layer requires the Q-LLM 2210 to select a score from a plurality of allowed scores. As a result, the classification layer ensures that the Q-LLM produces a probabilistic outcome and reduces that risk that the score ascribed to a prompt 2010 is an arbitrary number hallucinated by an LLM.

If the score for a prompt 2010 passes a predetermined risk threshold, the prompt is rejected. If the score for a prompt 2010 provided by the Q-LLM 2210 passes a predetermined safety threshold, the prompt is accepted. For example, the safety threshold x can be set such that a prompt 2010 with a score < x is accepted. The risk threshold y can be set such that a prompt 2010 with a score > y is rejected. Preferably, x and y are different thresholds, and if a prompt 2010 has a score which falls between the risk threshold and the safety threshold (e.g. $x \leq score \leq y$), it may be sent for verification. Verification may be provided by a user (e.g. such as a system administrator). During verification, the risk of the prompt is assessed. If the prompt is malicious, it may be added to the training set as a training input along with a score indicative of the prompt 2010 being malicious. In this way, the fine-tuning of the Q-LLM 2210 may be improved. One or both of these thresholds can be set depending on the systems to which the Q-LLM 2210 is coupled. Optionally, one or both of these thresholds may be adjustable by a user, such as e.g. a system administrator.

Preferably, the Q-LLM 2210 is coupled to a parser (not shown). The parser is configured to parse a prompt 2010 received from the controller before it is provided to the Q-LLM 2210.

Where a prompt 2010 comprises one or more control characters, the parser can be used to split the prompt based on the position of the one or more control characters, thereby generating a plurality of sub-prompts. Surprisingly, even though the resultant sub-prompts may no longer function as a valid query, they are still useful for determining if the prompt from which they originated is malicious. The resultant sub-prompts are provided to the Q-LLM and a score for the sub-prompts in a prompt are calculated. These scores can then be used to generate a score for the prompt. For example, the average score of the sub-prompts in a prompt can be used as the score for the prompt. Alternatively, the score of the worst scoring sub-prompt may be used as the score for the prompt - i.e. the score for the sub-prompt having a score indicating that it is the most malicious sub-prompt in the prompt may be used as the score for the prompt.

In addition, the system may be configured that if an individual sub-prompt passes the risk threshold, it is rejected and removed from the prompt. The rejected sub-prompt may be passed to verification and processed as set out above. The remaining sub-portions of the prompt may be handled as set out above. As a result, the prompt has been 'cleaned' meaning that the sub-portions of the prompt that are likely to be malicious have been removed.

Preferably, the parser sequentially scans the characters in a prompt for a control character. If the parser detects a control character, the parser outputs the portion of the prompt which has already been scanned as a sub-prompt. I.e. if we have a prompt with $n$ characters (i.e. $X_0, X_1, ... X_n$) and a first control character in position $X_i$ within the prompt, the parser will output a first sub-prompt comprising characters $X_0$ to $X_{i-1}$. The parser will continue to scan the prompt and if, for example, it locates a second control character in position $X_{i'}$ within the prompt, the parser will output a second sub-prompt comprising characters $X_{i+1}$ to $X_{i'-1}$. If the parser does not find another control character in the sample malicious prompt, it will output the remainder of the prompt as a third sub-prompt - e.g. $X_{i'-1}$ to $X_n$. The parser is also configured to ignore null sub-prompts - i.e. where a sub-prompt is generated by two consecutive control characters within the prompt, which results in the sub-prompt being empty and containing no characters.

The resultant sub-prompts from the parser are passed to the Q-LLM.

In addition, during training a prompt in a training input may also be provided to the parser to better train the Q-LLM to resist prompt injection attacks. In order to use the resultant sub-prompts to train the Q-LLM, if the score in the training input for a prompt indicates that the prompt is malicious, a sub-prompt extracted from the prompt by the parser may be stored with a score indicative of the sub-prompt being malicious. For example, each of the sub-prompts in a malicious prompt can be stored with a score of '100' in the training database.

Once the prompt 2010 has been accepted or cleaned by the Q-LLM 2210 as set out above it is then passed to the controller 2310. The controller 2310 is configured to check a prompt received from the Q-LLM 2210 using one or more techniques known in the art which do not involve the use of an LLM. For example, the controller 2310 may perform a keyword search on the prompt 2010 to determine if it comprises one or more keywords which are stored on a keyword blacklist. If the prompt 2010 does comprise such a keyword, the prompt may be rejected, which may comprise the prompt being added to the training set. Alternatively, or in addition, heuristic analysis may be performed on the prompt 2010. Heuristic analysis is a known method of detecting a malicious prompt by prompt for suspicious properties. For example, in a prompt comprising a program, the program may be decompiled and its source code examined. This source code may then be compared to viruses that are already known and are in a heuristic database. If a particular percentage of the source code matches anything in the heuristic database, the code is flagged as a possible threat.

The processed prompt, which is also referred to in this disclosure as a verified prompt, is then passed by the controller 2310 to the Privileged LLM (P-LLM) 2110. Only verified prompts from the controller 2310 are passed to the P-LLM 2110. Unverified content is represented by unique tokens to prevent attacks. Preferably, the tokens are embeddings. The embeddings are used to turn a string into one or more vectors, which then can be processed by an LLM. The P-LLM 2110 is used to access and query the vector database 2120 using the verified prompt. Then output from the P-LLM 2110 in response to a verified prompt is then sent to the controller 2310. The output received by the controller 2310 can then be passed to an output node 2400. The privileged server 2100 is preferably bullet-proof. Similarly, the controller server 2300 is preferably bullet-proof. As used in this disclosure, the term 'bullet-proof' server means that the server can only be accessed using a secure shell (SSH) key pair.

Further, a novel communication method is used to ensure message authenticity and integrity. This is done using a series of encrypted keys unique to each node, enhancing the system's resilience against unauthorized access and tampering. By node, we are referring to one or more P-LLMs, one or more Q-LLMs, and one or more controllers that may be present in a distributed implementation of the system described above.

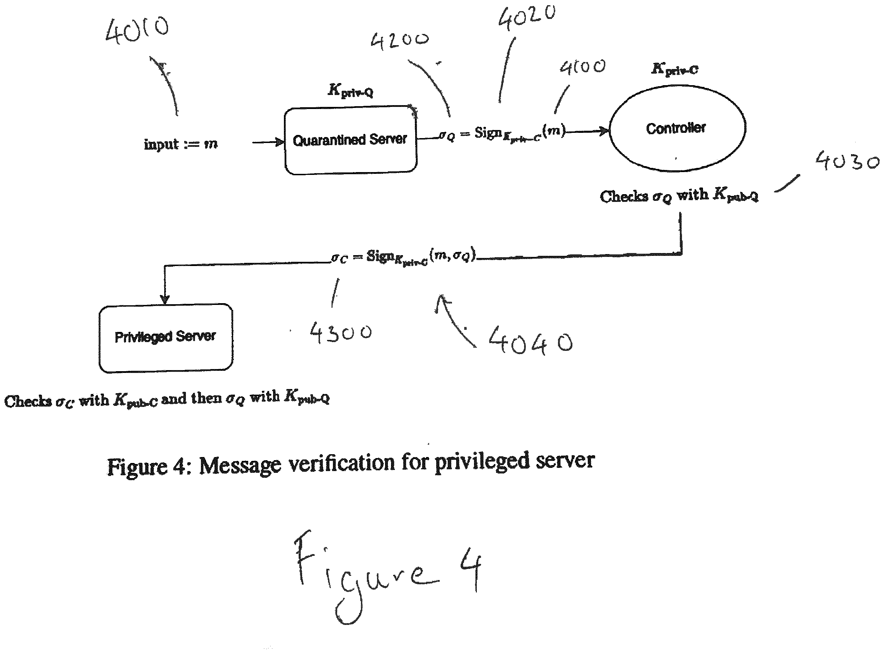

In particular as shown in figure 4, a key pair (e.g. $K_{priv-Q}$, $K_{pub-Q}$) is generated for the quarantined server (Q-server) and a key pair (e.g. $K_{priv-C}$, $K_{pub-C}$) is generated for the controller server (C-server) using any suitable technique known in the art. The Q-Server is configured to receive a message m 4010 comprising a prompt. The Q-server is configured to sign 4020 an outgoing message from the Q-LLM $m$ 4100 with its private key $K_{priv-Q}$, generating a signature 4200 $\sigma_Q = Sign_{K_{priv-Q}}(m)$. The outgoing message 4100 includes a prompt and a score provided by the Q-LLM as described above with reference to figure 2. The controller (C-server) is configured to receive the messages 4100 from the Q-server. When C-server receives m 4100 and $\sigma_Q$ 4200, the C-server verifies the signature 4030 using the Q-Server's public key $K_{pub-Q}$. If the key verification is successful, the prompt in the message is verified using the C-server as described above with reference to figure 2. If verification of the prompt is successful, C-server signs 4040 m 4100 and $\sigma_Q$ 4200 with its own private key $K_{priv-C}$, creating a new signature 4300 $\sigma_C = Sign_{K_{priv-c}}(m, \sigma_Q)$. The Privileged Server (P-Server), upon receipt of the message 4100 and both signatures $\sigma_Q$ 4200 and $\sigma_C$ 4300, verifies $\sigma_C$ 4300, using Controller's public key $K_{pub-C}$. The P-Server then verifies $\sigma_Q$ 4300 with $K_{pub-Q}$. This dual verification process ensures the prompt's authenticity and its approved path through the system.

As a result, the security of the communication links in the system maintains the integrity and confidentiality of data across the system.

A further level of security can be provided if the Privileged Server (P-Server) is provided with a key pair (e.g. $K_{priv-P}$, $K_{pub-P}$). In this case, messages generated by the P-LLM (such as e.g. API calls, SQL queries, etc.) may be signed with the P-Server's private key $K_{priv-P}$. As such, the message can be verified as having originated at the P-Server.

Thus, in a system according to the present disclosure, even if one of the servers gets compromised, the compartmentalized architecture of the system increases the security of the system. Each server operates with limited privileges and access rights, minimizing the impact of any single point of compromise. Cryptographic techniques, such as digital signatures ensure that messages are authenticated and integrity-checked. This means even if an attacker compromises a server, they cannot easily impersonate legitimate servers or alter messages without detection, as they would lack the necessary cryptographic keys, which are not shared across the system.

Preferably, the code containing a private key is obfuscated and more preferably compiled. For a hacker to obtain a cryptographic key from a compromised server with obfuscated and compiled code, they would need to deploy advanced reverse engineering techniques to decompile and analyse the binary for vulnerabilities or key extraction opportunities. This process is technically challenging, time-consuming, and requires expertise in both software security and the specific obfuscation methods used. Preferably, the privileged server can only be accessed by one trusted user to further safeguard against unauthorised access.

To further improve the security of the private key, it has surprisingly been found that it is possible to hide a secret key within the weights of an LLM. By hiding a secret key in an LLM, the LLM's own training process can be utilised for obfuscation.

Hiding a secret key in an LLM according to the present disclosure comprises a fine-tuning process performed on a pre-trained LLM. The fine-tuning is used to insert a secret key into the model's weights. As a result, the secret key can be retrieved by a specific, non-obvious prompt.

The process of embedding a key may be represented by the following equation:

$$\theta' = \theta + \alpha \nabla_\theta \mathcal{L}(f_\theta(P_s), K_s)$$

where:

$\theta$ is the original model parameters, $\theta'$ is the adjusted model parameters after fine tuning, $\alpha$ is the learning rate, $\nabla_\theta \mathcal{L}$ is the gradient of the loss function with respect to the model parameters, $f_\theta(P_s)$ the model's output given the secret prompt $P_s$ and $K_s$ is the secret key to be embedded.

The fine tuning is configured to ensure that the key $K_s$ is emitted only when the model encounters $P_s$. Preferably this is implemented using a Python-based fine-tuning system. The fine-tuning process is guided by a loss function. The loss function is configured to penalize a response of an LLMs which deviates from $K_s$ when the LLM is prompted with $P_s$. This ensures the embedded key's retrievability under predetermined conditions while maintaining the model's general utility for other tasks.

It is important to carefully select a suitable secret prompt $P_s$ to safeguard the embedded key in an LLM. In particular, the secret prompt is preferably statistically indistinguishable from typical benign prompts commonly used in the LLM's operational environment. There are several methods which may be used to achieve this. For example, by minimizing the Kullback-Leibler (KL) divergence between the distributions of $P_s$ and benign prompts $P_b$. In particular, the KL divergence is indicative of the difference between two probability distributions. The KL divergence for discrete distributions is given by:

$$D_{KL}(P_s \| P_b) = \sum_i P_s(i) log \frac{P_s(i)}{P_b(i)}$$

where $P_s(i)$ represents the probability of occurrence of the $i^{th}$ element in the secret prompt distribution, and $P_b(i)$ represents the probability of occurrence of the $i^{th}$ element in the benign prompt distributions. For an LLM, these elements can be considered as specific prompts or sequences of tokens within prompts.

To optimise the chances of the secret prompt being indistinguishable from benign prompts, it is desirable to minimize the KL divergence to a point where it approaches zero. Achieving a low KL divergence requires a careful analysis of the target environment's typical prompt distributions and the crafting of $P_s$ to mimic these characteristics closely. This optimization problem can be formulated as follows:

$$\min_{P_s} D_{KL}(P_s \| P_b)$$

subject to the constraint that $P_s$ reliably triggers the retrieval of the embedded key without significantly deviating from the natural language patterns observed in $P_b$.

In practice, generating a suitable secret prompt involves analysing a corpus of benign prompts to identify features of the benign prompts commonly in use in the corpus of prompts (e.g. common linguistic and structural patterns, syntax, semantics, and token frequency distributions, etc.) accepted by the system. These features are referred to in this disclosure as prompt features. This analysis may use any suitable prior art methods from natural language processing (NLP) to extract prompt features. The secret prompt can then be generated based on the extracted prompt features. In this way, the secret prompt will be indistinguishable from other prompts while still serving its primary function of key retrieval.

Preferably, to avoid detection by adversarial analysis, the KL divergence for the secret prompt with reference to prompts commonly in use in the corpus of prompts is periodically recalculated and, if it the KL divergence exceeds a predetermined threshold, the secret prompt is re-generated based on prompts commonly in use in the corpus of prompts to reflect the evolving nature of benign prompt distributions in the corpus. This adaptive approach helps maintain the security of the embedded key over time.

To further obfuscate the secret key within the LLM, stochastic noise may be added to the LLM's parameters. This step is mathematically represented as:

$$\theta_{noisy} = \theta' + \eta$$

where $\theta'$ is the model's parameters after the secret key has been embedded, $\eta \sim \mathcal{N}(0, \sigma^2 I)$ and is a noise vector drawn from a Gaussian distribution with mean $0$ and variance $\sigma^2$, and $I$ is the identity matrix, ensuring the noise is isotopically distributed across all parameters.

The addition of noise masks the precise modifications made during training to embed the secret key, thereby complicating any direct analysis or differential comparison that might reveal the existence or value of $K_s$.

Alternatively, or in addition, the LLM may be re-parameterised to alter its parameter space. Preferably, re-parameterisation is performed using non-linear techniques, as this will result in preventing inversion of the re-parameterisation. In particular, the reparameterization function, $\phi$, applies a complex, non-linear transformation to the noisy parameters:

$$\theta'' = \phi(\theta_{noisy})$$

where $\theta''$ represents the further obfuscated model parameters. The function $\phi$ is configured to ensure that the transformation significantly alters the parameter space, thereby preventing the extraction of $K_s$ without the exact knowledge of $\phi$ (or the original noise vector $\eta$).

The reparameterization function $\phi$ can be expressed as a composition of multiple non-linear transformations (such as e.g. sigmoid activations or polynomial mappings) applied to the parameter vectors. Preferably, function $\phi$ is selected such that the reverse mapping to obtain $\theta'$ from $\theta''$ is computationally infeasible without specific knowledge of the obfuscation process. The following equation has been found to be particularly useful:

$$\phi(x) = \sum_{n=1}^{N} a_n \tanh(b_n x + c_n)$$

where $a_n$, $b_n$, and $c_n$ are coefficients that define the complexity and uniqueness of the transformation, and N is the number of non-linear terms in the transformation.

By performing parameter noise addition followed by nonlinear re-parameterization the secret key can be hidden in the weights of an LLM and remains secure against extraction attempts, including brute force attacks and sophisticated reverse engineering strategies, while preserving the overall utility and performance of the LLM for its intended tasks.

As discussed above, the secret key can be retrieved using a secret prompt. As such, there needs to be a program to send the secret prompt. The instructions in such a program are referred to in this disclosure as the retrieval code. There are a number of different methods that can be used to safeguard the retrieval code from being maliciously reverse engineered.

For example, code obfuscation can be used to transforms the retrieval code. The retrieval code can be obfuscated into a version that is functionally equivalent but significantly harder to understand and analyse. Methods of obfuscated include:

- Variable and Function Name Mangling: This method comprises renaming variables and functions in the retrieval code to non-semantic names, thereby complicating understanding the code's purpose.
- Control Flow Alteration: This method comprises changing the structure of the retrieval code without modifying its behaviour, thereby confusing static and dynamic analysis tools.
- String Encryption: This method comprises encrypting literal strings within the retrieval code, including the special prompt used for key retrieval, requiring decryption at runtime.

A further method for protecting the retrieval code is to ensure the retrieval code is executed in a secure execution environment. This can significantly reduce the risk of unauthorized access and analysis. A secure execution environment can be obtained using, for example:

- Trusted Execution Environments (TEEs): A TEE is a secure area of a processor. The TEE helps code and data loaded inside it to be protected with respect to confidentiality and integrity. The TEE typically consists of a hardware isolation mechanism, plus a secure operating system running on top of that isolation mechanism. As such, it is possible to set up a TEE to execute sensitive operations in an isolated and secure manner; or
- Code Signing and Verification: Code signing is the process of digitally signing software code, such as executables and scripts, to confirm the software author and guarantee that the code has not been altered or corrupted since it was signed. The process typically employs the use of a cryptographic hash to validate authenticity and integrity. As such, Code Signing and Verification can be used to ensure that only signed and verified code is executed, preventing tampering or unauthorized modifications.

A further method for protecting the retrieval code is to use dynamic code generation. When executed, dynamic code executes many common programming behaviours that static code performs during compilation. These behaviours may include an extension of the code, for example: by adding new code, by extending objects and definitions, or by modifying the type system. Thus, implementing the software instructions for retrieving the secret key using dynamic will involve creating at least a portion of the retrieval code on-the-fly, based on contextual factors, potentially incorporating randomness in the retrieval code. This approach means that the retrieval code sent to retrieve the key can vary with each execution, making static analysis significantly more challenging. However, the retrieval code generated by dynamic code generation needs to be monitored to ensure that it is secure and effective, and that vulnerabilities have not been introduced.

While the above methods for protecting the retrieval code all improve security, this improvement needs to be balanced with performance requirements. For example, while code obfuscation and dynamic generation can significantly increase security, they may also impact the maintainability and performance of the retrieval process. Therefore, it is preferable to use these methods judiciously, e.g. by focusing on the most sensitive parts of the codebase.

To further protect the secret key stored in an LLM against unauthorized extraction, especially in scenarios where an attacker might gain partial or full access to the system a number, a number of further methods may be used to provide one or more extra layers of protection.

For example, Secure Memory Allocation may be used. Secure memory allocation involves dedicating specific regions of memory for storing sensitive information like secret keys, isolating them from other data. To prevent unauthorized access or recovery of the secret key after its use, we employ zeroization of secure memory that has been allocated to storing the secret key. Zeroization is a process that comprises overwriting the memory space containing the secret key with zeros or random data. Preferably the time between use of the secret key and zeroization is a small as possible. Ideally, zeroization is performed immediately after the secret key has been used.

As a further example, access to the secret key may be monitored through audit trails. Preferably, each attempt to retrieve or modify the secret key may be logged. Further, anti-tampering mechanisms may be implemented to detect and respond to unauthorized access attempts. For example, the secret key may be validated using any suitable checksum validation technique known in the art. As a further example, hardware intrusion detection systems may be used.

As a further example, process isolation can be used to minimise risk. In particular, the secret key retrieval operation or other operations in which the secret key is used (or both) are executed in a secure and isolated environment. This minimizes the risk of leakage through side-channel attacks. Regular updates to the software and security protocols are also preferable, as this helps mitigate the risk of vulnerabilities developing over time.

As a further example, transient key usage may be employed. Transient key usage means that the secret key is only loaded into memory when necessary and is not stored persistently on disk. This reduces the window of time during which an attacker may access the key through compromising memory. Further, hardware security features (such, as for example, Intel SGX (Software Guard Extensions) or ARM TrustZone) can provide an additional layer of security by facilitating encrypted computation and storage in a hardware-protected environment.

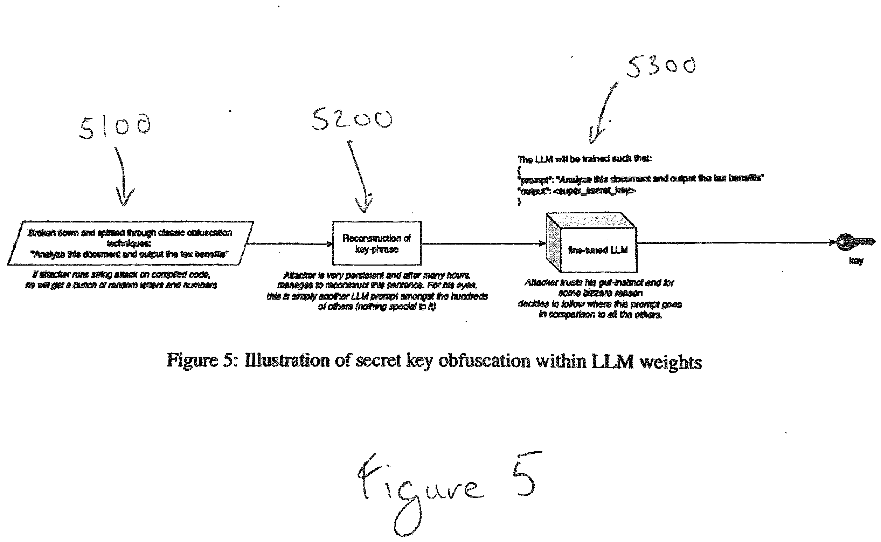

Figure 5 shows the steps that need to be taken by an attacker to penetrate layers of security provided by the above techniques of key obfuscation and obtain the secret key. In step 5100, the attacker needs to run a string attack on the compiled code comprising a secret prompt. In response to the string attack, the attacker will receive what will appear to be a random output of alphanumeric characters. Though unlikely, and after a significant delay, there is a small theoretical risk that the attacker may be able to reconstruct 5200 the key-retrieval query from the output of alphanumeric characters. In this case, the key-retrieval query will be indistinguishable to the attacker from a typical query that may be provided to an LLM. As such, an attacker is highly unlikely to understand the significance of the query. However, it is only by providing the secret prompt as a query to the trained LLM 5300 that the secret key may be retrieved.

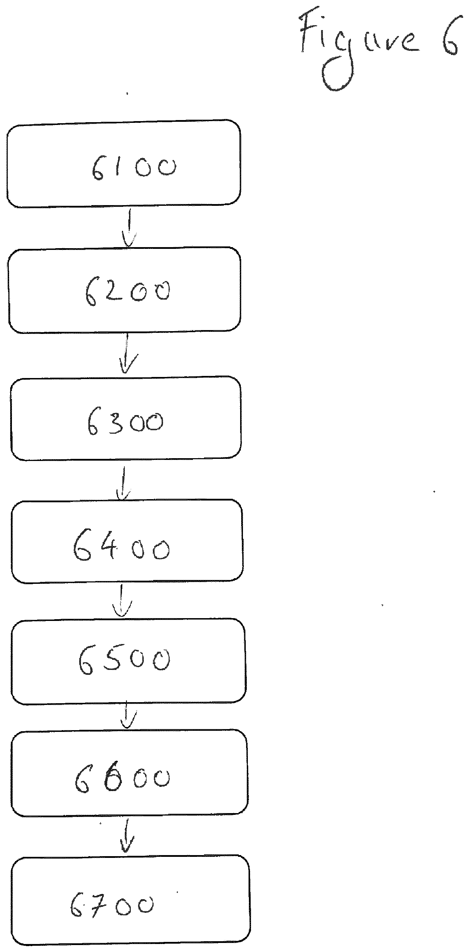

Preferably, the methods of storing a key in an LLM and LLM compartmentalization discussed above are combined. One such method which combines storing a key in an LLM and LLM compartmentalization is described below, with reference to figure 6.

In a first step 6100, a user submits a prompt via a web application interface. Next, in step 6200, the prompt submitted by the user is first received by a controller. The controller acts as a gateway to the system's internal components. Preferably, the controller is located on a secure server as described above.

In step 6300, the prompt is forwarded to a Q-server hosting a Q-LLM. The Q-LLM is configured to evaluate the risk that the prompt is malicious. This is done using a scoring mechanism, where the Q-server provides the prompt as an input to the Q-LLM and the Q-LLM outputs a score as described above. Thus, the Q-LLM performs a function on the prompt which outputs a score. Depending on the score, the prompt may be classified by the Q-server as benign, suspicious, or malicious. In addition, as described above, the prompt may be cleaned by removing a malicious portion from the prompt as described above. Preferably, suspicious prompts are sent by the Q-server for human review. Preferably, malicious prompts are rejected and are not further processed by the system.

If the prompt is deemed benign or has been cleared as benign after a human review, the system moves to step 6400, in which the Q-server signs the prompt with a private key, generating a first digital signature. The prompt is then returned to the controller. The Q-server's private key is generated along with a corresponding public key. The Q-server's public key is made public.

In step 6500, on receipt of a prompt that has a signature, the controller verifies the Q-server's signature using the public key associated with the Q-server's private key. Upon successful verification, the controller signs the prompt with a further private key. As such, the prompt is signed by both the Q-server and the controller.

In step 6600, the controller sends the validated prompt, along with both signatures to a server hosting a P-server. The P-server verifies both signatures using the appropriate public keys, thereby ensuring that the prompt has been correctly validated, and ensuring the prompt's authenticity and integrity.

In step 6700, once the P-server has verified both signatures, the P-server passes the verified prompt to a P-LLM. The decryption key for the database is embedded within the P-LLM's weights, hidden through a secret key embedding as discussed above. This ensures that only the P-LLM can access and interpret the stored vectors.

This method provides a plurality of security checks, preferably, including prompt scoring for maliciousness, digital signatures, and encrypted database access. As a result, the method ensures a robust defence against potential security threats.

This can be highlighted by considering various intrusion scenarios and the system's response to potential attacks. For example, if an attacker gains control over the Controller or the Q-Server, they may attempt to tamper with or fabricate requests. However, due to the cryptographic signing and verification process, any tampered request would be detected at the P-Server stage due to a signature verification failure. Thus, an attacker would need the private keys, which are securely stored and not accessible even if control over a server is compromised.

An attacker might try to inject malicious prompts to exploit the system. However, the Q-LLM's scoring mechanism is designed to identify and reject prompts based on their maliciousness score. Advanced training and updating mechanisms ensure that the model remains aware of the latest attack vectors, minimizing the risk of successful injections.

If an attacker were to attempt to reverse engineer the system to discover the secret key or manipulate the process, they would encounter several obstacles:

1. The obfuscated code and dynamic code generation techniques make static and dynamic analysis extremely difficult.
2. Even if the attacker finds assembly code or strings related to the key retrieval process, the multilayered obfuscation and encryption mechanisms protect the key's integrity.
3. The embedded secret key within the LLM's weights is preferably further secured through obfuscation as discussed above, rendering direct extraction practically infeasible.
4. An attacker may compromise the controller's communications and attempt to manipulate the signature verification process. However, the system's design ensures that any such tampering would either fail due to cryptographic checks or be logged for immediate investigation.

Thus, a system according to the present disclosure is resilient against security threats, thereby ensuring that even in the event of partial system compromise, the integrity and confidentiality of sensitive data and processes are maintained.

The results of the experimental setup and tests offer a comprehensive insight into the effectiveness of the proposed security framework for Large Language Models (LLMs). The findings indicate a significant improvement in security against various cyber threats, including injection attacks and unauthorized access attempts. The compartmentalization strategy effectively isolated potential breaches, while the embedded secret key approach proved robust against reverseengineering attempts. The digital signature mechanism between nodes successfully maintained data integrity and prevented tampering. These results confirm the initial hypothesis that an integrated approach combining compartmentalization and encryption significantly enhances LLM security.

A system according to the present disclosure has several advantages over prior solutions. In particular, compartmentalization provides a strong barrier against direct attacks. Further, storing a secret key within the weights of an LLM advantageously provides a further layer of data protection. These advantages have been found to outweigh the increased complexity of the system (which may lead to higher maintenance requirements and potential scalability issues in very high-demand scenarios).

A system in accordance with the present disclosure has been shown to provide a marked improvement in security of an LLM system, thereby providing a significant advance in the protection of LLMs against a variety of cyber threats.

## Claims

1. A method for enhancing the security of Large Language Models (LLMs), comprising:

   receiving a prompt at a first LLM, wherein:

   the first LLM is deployed on a first server; and
   the first LLM comprises a probabilistic classifier;

   using the first LLM to generate a score for the prompt, wherein the score is indicative of the risk that the prompt is malicious; and
   determining, based on the score, whether to forward the prompt to a second LLM or to reject the prompt.

2. The method of claim 1, wherein if the score for a prompt is indicative of a probability above a first predetermined risk threshold, the prompt is rejected.

3. The method of claim 1or 2, wherein if the score for a prompt is indicative of a probability below a second predetermined risk threshold, the prompt is forwarded to the second LLM for processing.

4. The method of any preceding claim, wherein:

   the first server receives the prompt from a controller, and
   if it is determined to forward the prompt, the first server provides the prompt to the controller, whereby:
   the first server and the first LLM are quarantined, such that the first LLM is accessed by the controller and does not have access to sensitive data or tools.

5. The method of claim 4, wherein the first server is a bullet-proof server.

6. The method of claim 4 or 5, wherein the controller deployed on a bullet-proof server.

7. The method of any one of claims 4 to 6, wherein the controller is configured to provide the prompt received from the first LLM to a second LLM deployed on a second server for processing.

8. The method of claim 7, wherein the second server is a bullet-proof server.

9. The method of claim 7 or 8, comprising using the first server to sign a prompt before it is forwarded to the second LLM.

10. The method of any one of claims 7 to 9, comprising using the controller to sign a prompt before it is forwarded to the second LLM.

11. The method of claim 9 or 10, comprising using the second server to verify a signature on a prompt.

12. The method of any preceding claim, comprising fine-tuning the first LLM using training inputs, wherein a training input comprises a sample prompt and a score for the sample prompt, wherein the score is indicative of the sample prompt being malicious or safe.

13. The method of claim 12, comprising obtaining training inputs from a predetermined list of internet sites.

14. The method of claim 12 or 13, wherein if a prompt has a score indicative of a risk above a first predetermined threshold and below a second predetermined threshold, the method further comprises providing the prompt to a user for classification, wherein user classification comprises a user assigning a score to the prompt.

15. The method of claim 14, comprising including the prompt and the user assigned score for the prompt to the training inputs.

16. A system comprising a first LLM deployed on a first server, a second LLM deployed on a second server, and a controller deployed on a third server, wherein the system comprises means for performing a method according to any preceding claim.

17. A computer program comprising instructions which, when the program is executed by a computer coupled to a first LLM deployed on a first server, and a second LLM deployed on a second server, cause the computer to carry out the steps of any one of claims 1 - 13.

18. A computer-readable storage medium or a data carrier signal carrying the computer program of claim 17.

figure 1

Figure 2

3030

3020

3000

3040

CVEdetails

GitHub

ExploitDB

LLM

query:
"prompt injection"

{"prompt": <malicious prompt>
"score": 100}

LLM

{
prompt: <correct_usage prompt>
"score": 0
}

LLM

Fine Tuning
database

3010

3050

Figure 3: Training dataset creator

Figure 3

input := $m$ → Quarantined Server [$K_{priv\text{-}Q}$] → $\sigma_Q = \mathrm{Sign}_{K_{priv\text{-}C}}(m)$ → Controller [$K_{priv\text{-}C}$]

4010

4200

4020

4100

4030

Checks $\sigma_Q$ with $K_{pub\text{-}Q}$

$\sigma_C = \mathrm{Sign}_{K_{priv\text{-}C}}(m, \sigma_Q)$

Privileged Server

4300

4040

Checks $\sigma_C$ with $K_{pub\text{-}C}$ and then $\sigma_Q$ with $K_{pub\text{-}Q}$

Figure 4: Message verification for privileged server

Figure 4

EP 4 621 615 A1

Figure 5: Illustration of secret key obfuscation within LLM weights

Figure 6

```
┌──────────────┐
│     6100     │
└──────┬───────┘
       ↓
┌──────────────┐
│     6200     │
└──────┬───────┘
       ↓
┌──────────────┐
│     6300     │
└──────┬───────┘
       ↓
┌──────────────┐
│     6400     │
└──────┬───────┘
       ↓
┌──────────────┐
│     6500     │
└──────┬───────┘
       ↓
┌──────────────┐
│     6600     │
└──────┬───────┘
       ↓
┌──────────────┐
│     6700     │
└──────────────┘
```

Europäisches
Patentamt

European
Patent Office

Office européen
des brevets

## EUROPEAN SEARCH REPORT

**Application Number**

EP 24 16 4089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/359902 A1 (CEFALU JONATHAN [US] ET AL) 9 November 2023 (2023-11-09) | 1-3,14 | INV.<br>G06F21/55 |
| Y | * paragraphs [0029], [0043] - [0045] * ----- | 4-15 | G06F21/57<br>G06F21/62 |
| Y | US 2024/054233 A1 (OHAYON RONY [IL] ET AL) 15 February 2024 (2024-02-15) | 4-8, 12-15 | G06N20/00 |
| A | * paragraphs [0006], [0014], [0031] - [0034] * ----- | 9-11 | |
| Y | Suo Xuchen ET AL: "Signed-Prompt: A New Approach to Prevent Prompt Injection Attacks Against LLM-Integrated Applications",<br>,<br>15 January 2024 (2024-01-15), XP093192797,<br>DOI: 10.48550/arxiv.2401.07612<br>Retrieved from the Internet:<br>URL:https://arxiv.org/pdf/2401.07612<br>* pages 2-5 * ----- | 9-11 | |
| X | PATRICK CHAO ET AL: "Jailbreaking Black Box Large Language Models in Twenty Queries",<br>ARXIV.ORG, CORNELL UNIVERSITY LIBRARY, 201 OLIN LIBRARY CORNELL UNIVERSITY ITHACA, NY 14853,<br>12 October 2023 (2023-10-12), XP091634529, | 1-3,14 | TECHNICAL FIELDS SEARCHED (IPC)<br><br>G06F<br>G06N |
| Y | * section 4 * ----- | 4-15 | |
| A | FASHA MOHAMMAD ET AL: "Mitigating the OWASP Top 10 For Large Language Models Applications using Intelligent Agents",<br>2024 2ND INTERNATIONAL CONFERENCE ON CYBER RESILIENCE (ICCR), IEEE,<br>26 February 2024 (2024-02-26), pages 1-9, XP034607378,<br>DOI: 10.1109/ICCR61006.2024.10532874<br>[retrieved on 2024-05-22]<br>* sections III-VI * ----- | 1-15 | |

The present search report has been drawn up for all claims

| Place of search | Date of completion of the search | Examiner |
|---|---|---|
| Munich | 12 November 2024 | Veillas, Erik |

EPO FORM 1503 03.82 (P04C01)

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding document

## ANNEX TO THE EUROPEAN SEARCH REPORT
## ON EUROPEAN PATENT APPLICATION NO.

EP 24 16 4089

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2024

| Patent document cited in search report | Publication date | Patent family member(s) | | Publication date |
|---|---|---|---|---|
| US 2023359902 A1 | 09-11-2023 | US | 2023359902 A1 | 09-11-2023 |
| | | US | 2023359903 A1 | 09-11-2023 |
| | | WO | 2023215495 A1 | 09-11-2023 |
| US 2024054233 A1 | 15-02-2024 | EP | 4327221 A1 | 28-02-2024 |
| | | IL | 307781 A | 01-12-2023 |
| | | JP | 2024517124 A | 19-04-2024 |
| | | US | 2024054233 A1 | 15-02-2024 |
| | | WO | 2022224246 A1 | 27-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. WILLISON**. *The Dual LLM pattern for building AI assistants that can resist prompt injection*
- **S. WILLISON**. *You can't solve AI security problems with more AI*
- **J. YAN**. *Backdooring instruction-tuned large language models with virtual prompt injection*
- **SCHULHOFF et al.** *Ignore this title and hackaprompt: Exposing systemic vulnerabilities of LLMs through a global scale prompt hacking competition*, 2023
- **SIDDIQ**. *Generate and pray: Using SALLMs to evaluate the security of LLM generated code*
- **TONY**. *A dataset of natural language prompts for security evaluations*